(19) Europäisches Patentamt
European Patent Office
Office européen des brevets

(11) Publication number: 0 315 836 A2

# (12) EUROPEAN PATENT APPLICATION

(21) Application number: 88117962.6

(22) Date of filing: 28.10.88

(51) Int. Cl.[4]: C08L 101/00, C08G 77/42, C08L 83/04

(30) Priority: 30.10.87 US 115215

(43) Date of publication of application: 17.05.89 Bulletin 89/20

(84) Designated Contracting States: BE CH DE FR GB IT LI LU NL

(71) Applicant: HÜLS AMERICA INC. (a Delaware corporation)
Turner Place
Piscataway New Jersey 08855(US)

(72) Inventor: Finberg, Arne O.
1136 West Warren Road
West Chester, PA 19382(US)

(74) Representative: Meyer, Joachim et al
Hüls Troisdorf Aktiengesellschaft Kölner Strasse 176 Postfach 1165
D-5210 Troisdorf(DE)

## (54) Polyorganosiloxane based interpenetrating network polymers and methods of making.

(57) Cross-linked polyorganosiloxane networks are prepared by dispersing vinylsiloxane and silicon hydride components in a liquid monomer, cross-linking the siloxane components by hydrosilylation, and polymerizing of the organic monomer. Poly-penetrating network systems may be prepared by cross-linking one or more organic polymers in the presence of the polyorganosiloxane network. At least one of the organic polymers is a vinyl or vinylidene addition polymer which may be polymerized by free radical polymerization. The interpenetrating polymer network systems may be cast, molded, extruded or formed into films, membranes and coatings. The resulting products have improved mechanical, gas permeability and optical properties compared to conventional silicone elastomers.

EP 0 315 836 A2

Xerox Copy Centre

# POLYORGANOSILOXANE BASED INTERPENETRATING NETWORK POLYMERS AND METHODS OF MAKING

## Field of the Invention

The present invention relates to the preparation of novel organosilicone interpenetrating polymer systems. More particularly, the invention is directed to highly relaxed and perturbed polyorganosiloxanes which are cross-linked to form networks which interpenetrate another polymer or polymers.

## Background of the Invention

Traditional silicone rubber technology has to go through the following steps: (1) polymerization of a siloxane; (2) filler compounding; and (3) transferring this compound to a mold which is maintained at high temperatures for extensive periods of time under pressure. Due to the high degree of cross-linking needed to achieve useful properties, curing at elevated temperatures over an extended period of time is required. This processing is extremely slow and labor intensive. Furthermore, due to the inorganic filler and multifunctional crosslinks needed, a rubber product with low recovery and high permanent set may result, particularly if not properly "post cured."

Previous work of Klempner et al., Sperling, and Lipatov et al. in the 1970s on interpenetrating polymer network materials dealt with heterogeneous systems prepared either by latex blending, melt extrusion or post-swelling of cross-linked polymer. Such techniques result in heterogeneous cross-linked systems with large macro domains of each of the phases present, as well as strained networks dispersed within the material. Due to the heterogeneous morphology present in those systems described in the literature, such networks have been considered as blends of polymer/polymer composite systems rather than true molecularly interpenetrating networks, which were first defined by J. R. Millar, J. Chem. Soc., 1311 (1960). However, such networks depend upon re-swelling previously formed networks which results in strained elastomeric systems having low retractability.

Blends of silicone rubber and an organic vinyl polymer have also been reported, but the poor mechanical properties of such blends due to the incompatibility of the polymeric components, resulted in no useful materials. A more recent approach is described in U.S. Patent 4,500,688 of Arkles, assigned to the same assignee as the present invention. In that patent polysiloxanes are vulcanized (cross-linked or chain extended) after mixing with a matrix polymer and during melt processing of the composition to produce silicone semi-interpenetrating networks in the thermoplastic matrix. However, the earlier art produces a macro cell structure as described by Sperling in Macromolecular Reviews, 12:141 (1977) and Interpenetrating Polymer Networks and Related Materials, Plenum Press, N.Y. (1981). In general, the larger the domains, the poorer will be the physical properties due to the lack of penetration through the domain.

Attempts to prepare cross-linked composites of polydimethylsiloxane with polystyrene and polymethacrylate by cross-linking polysiloxane rubber, followed by swelling and polymerizing the second component during high temperature peroxide curing, resulted in multiphase, densely cross-linked systems where the overall system is cured together, forming a brittle, semi-rigid or leathery material with poor elastic properties. See S.L. Aggarwal, Ed., Block Coploymers, Plenum Press, N.Y. (1970). Such cured composites have no practical usage due to poor properties. Earlier work does not teach the art of preparing a well-defined, perturbed and relaxed network of polyorganosiloxane as a route to preparing true interpenetrating networks on a molecular scale.

## Brief Summary of the Invention

According to the invention, compositions are provided in which a relaxed, perturbed, cross-linked polyorganosiloxane network is dispersed in a second organic polymer, preferably a homogeneous vinyl or vinylidene polymer, to form a penetrating network in the second polymer. The compositions may be mono-penetrating networks, where the second polymer is not significantly cross-linked; dual-penetrating networks,

where the second polymer is substantially cross-linked to itself; or poly-penetrating polymer networks, where two or more polymers in addition to the polyorganosiloxane are present, with each polymer being substantially cross-linked to itself but not significantly cross-linked to the other polymers.

Compositions of the invention are produced by dispersing a component having silicon hydride (SiH) groups and an organosiloxane having vinyl groups in a reactive liquid monomer, reacting the silicon hydride and vinyl groups by hydrosilylation to form the organosiloxane network in the monomer, and simultaneously or subsequently polymerizing the monomer. Dual- and poly- penetrating networks are formed by sequentially cross-linking the second polymer and any additional polymers which are present in the composition. The hydrosilylation reaction is preferably catalyzed by a platinum catalyst, and the second and any additional polymers may be polymerized and cross-linked by free radical, anionic, cationic or organometallic polymerization. Further, the reactions of the present invention may be carried out by modified bulk, solution or suspension polymerization.

The compositions of the present invention may be produced in the form of a pourable gel for preparing films, coatings and castings, or dried beads or pellets for molding and extrusion. Homogeneous compositions according to the invention may be prepared to produce optically clear compositions for contact lenses and other medical and optical uses.

## Detailed Description of the Preferred Embodiments

The present invention is directed to the preparation of inter-penetrating network systems composed of an organosiloxane polymer and at least one other organo polymer to produce highly retractable inter-penetrating silicone elastomer systems with improved elastomeric properties. According to rubber elasticity theory, cross-linked, strained networks undergo less deformation and have greater retractive stress than relaxed networks. In contrast, the present invention produces organosilicone elastomeric interpenetrating networks having significantly better recovery than both silicone rubbers and other interpenetrating network polymers prepared by the prior art.

While applicant does not wish to be bound by any particular theory, the following is believed to be at least a partial explanation for the superior properties of the compositions of the present invention. In the present invention, the interpenetrating networks are produced without swelling or shear stress being present, resulting in relaxed interpenetrating polymer networks. In the method of U.S. patent 4,500,688 of Arkles, referred to above, the vulcanization of the hydride-containing silicone via a hydrosilylation reaction takes place within a polymeric thermoplastic matrix. Although the hydrosilylation reaction in such systems is carried out while the matrix polymer is in a fluid melt state, it is believed that a certain amount of strain is introduced into the resulting silicone interpenetrating networks due to the polymeric nature of the thermoplastic matrix.

In contrast, according to the present invention, the hydrosilylation reaction is carried out with the vinyl-containing organosiloxane and the silicon hydride component being dispersed, and preferably dissolved, in a monomer for the second polymer. This hydrosilylation reaction is carried out, for example, by using platinum catalyst systems such as those described in U.S. patent 3,419,593. This cross-linking of the vinylsiloxane and silicon hydride components is believed to result in a substantially relaxed, perturbed polyorganosiloxane network which will penetrate or interpenetrate subsequently formed polymers from the monomer(s) in which the organosiloxane components are dispersed.

As used herein, the term "perturbed" refers to the extended state of the polyorganosiloxane chains as allowed by the fluid medium of the liquid monomer in which the organosiloxane components are dispersed and cross-linked. This contrasts with an unperturbed polymer state, such as obtained when a polymer is formed or cross-linked in a conventional bulk polymerization, whereby the polymer is in a substantially coiled or non-extended state. The concept of perturbation is discussed mathematically, for example, in P.J. Flory, Principles of Polymer Chemistry, pages 424-431, Cornell Univ. Press (1953) and D.W. Van Krevelin, Properties of Polymers, page 176 , Elsevier, Amsterdam (1976).

Similarly, as used herein, the term "relaxed" refers to the substantial absence of stress during the cross-linking of the organosiloxane components so that the resulting polyorganosiloxane network is substantially unstrained. That is, while perturbed polymer chains or networks can be obtained by swelling or the application of other shear stress to the polymer after formation, such as dissolving the formed polymer in a solvent, the resulting swollen network will be strained and thus undergo less deformation and have greater retractive stress than a relaxed network such as formed according to the present invention.

Surprisingly, it has been discovered according to the present invention that the hydrosilylation reaction

between the silicon hydride and vinylsiloxane groups occurs even where the reactive solvent (monomer) contains vinyl or vinylidene groups, and even where the concentration of vinyl groups on the vinylsiloxane is extremely low. This was quite unexpected since the hydrosilylation reaction has been reported to take place between SiH and vinyl or vinylidene groups such as in methylmethacrylate and acrylate monomers (F. P. MacKay et al., J. Am. Chem. Soc., 79:2764 (1957)) and in styrene and alpha-methylstyrene (J. W. Ryan et al., J. Org. Chem., 24:2052 (1959)) using a typical platinum-based hydrosilylation catalyst for this reaction at ambient or elevated temperatures. Accordingly, the present invention may be carried out with substantially no cross-linking between polyorganosiloxane and the monomer for the second and any additional polymers present in the composition.

The preparation of polyorganosiloxanes by hydrosilylation (sometimes referred to as two-part vulcanizing silicones) is well known in the art, and the formation of such systems is described, for example, in Arkles patent 4,500,688. In general, the two-part system generally contains one polymeric silicone component having silicon hydride (SiH) groups, while the other polymeric component contains unsaturated groups, preferably vinyl groups. Reaction of the silicon hydride groups with the unsaturated groups results in cross-linking of the components. Both the hydride and unsaturated groups can be part of the same polymeric silicone, in which case the silicone cross-links with itself.

Generally, such reactions are carried out with a catalyst, preferably a platinum complex. Virtually, any of the conventional silicone components used in forming polyorganosiloxanes by hydrosilylation may be used in the present invention. Preferred organosiloxanes for use in the present invention include polydimethylsiloxanes, polydiphenylsiloxanes, polymethylphenylsiloxanes, and various copolymers thereof. More particularly, vinyl-terminated polysiloxanes are preferably reacted with methylhydrosiloxanes containing at least two hydrides per molecule.

The monomers which serve as the dispersion medium for the siloxane components and which react to form the second polymer or any additional polymer may be selected from any of a wide range of monomers which will not inhibit the hydrosilylation reaction. Such monomers include those which undergo free radical, anionic, cationic or organometallic polymerization. Particularly preferred are monomers which undergo free radical addition polymerization, particularly vinyl and vinylidene monomers.

While it will be understood from the foregoing that the invention is not limited to any particular second or subsequent polymer, the invention will be described hereafter with particular reference to vinyl and vinylidene polymers. Particularly preferred monomers for use in the present invention include the acrylates, methacrylates, styrenes including α-methylstyrenes and alkylstyrenes, vinyl ethers, acrylamides such as N-alkylacryl- or methacrylamides, vinyl esters, vinyl pyrrolidones and vinyl pyridines. Still more preferably, the monomer is a homogeneous vinyl monomer system which allows the preparation of optically clear compositions according to the present invention.

The hydrosilylation reaction may be represented by the following equation which shows a single cross-link:

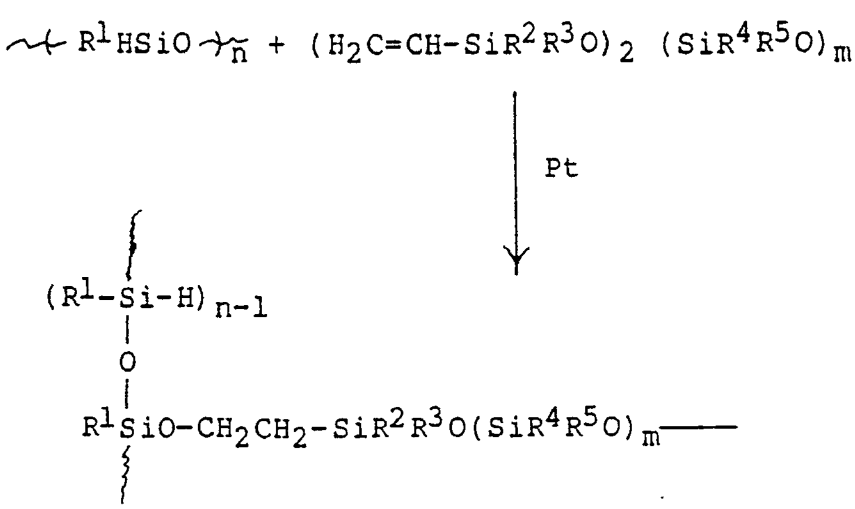


wherein $R^1$ through $R^5$ can independently be any of a wide variety of organo groups which are used in siloxane polymers, including saturated or alkyl or aryl, with partial or complete halogen substitution, cyanoethyl or cyanopropyl, amino-substituted aryl or alkyl groups, and the like; and n and m indicate the

degree of polymerization which may vary from 1 to about 100,000,000.

As indicated above, the reaction is preferably catalyzed by a platinum catalyst such as those described in U.S. patents 3,159,601; 3,159,662; 3,419,593; 3,715,334; 3,775,452 and 3,814,730. A particularly suitable catalyst is a complex of hexachloroplatinic acid with tetramethyldivinyldisiloxane, which may be present in an amount of less than about 1 percent by weight of the total composition.

As the hydrosilylation reaction proceeds, a significant increase in viscosity is observed in the organosiloxane/monomer solution or dispersion. The rate of viscosity increase varies depending upon a number of factors, including: (1) the polysiloxane components present, (2) the vinylsiloxane and silicon hydride concentrations, (3) the reactor conditions of temperature/pressure and degree of mixing, and (4) the degree of cross-links formed by the hydrosilylation reaction.

The viscous solution or dispersion eventually forms a gel, and the degree of gelation may be terminated at any given viscosity by adding a known catalyst inhibitor or a retardant for the hydrosilylation reaction. If desired, the gel at this point may be cast into a mold or formed into a coating or film prior to the next reaction step.

The next process step consists of converting the organic monomer or monomers into polymeric material, preferably by means of a free radical addition polymerization mechanism. This polymerization may be carried out at ambient or elevated temperatures with a free radical initiator such as an azo or peroxide initiator. Unless it is desired to also cross-link the second polymer at this point, it is preferred to use azo or other low temperature initiators in order to avoid cross-linking.

Many suitable free radical initiators are known in the art and commercially available, including, for example, t-butyl peroxypivalate, a low temperature peroxide catalyst sold under the trademark Lupersol-11 (a 75 percent catalyst solution in mineral spirits), 1,1-Bis(t-butyl peroxy) 3,3,5-trimethylcyclohexane sold under the trademark Trigonox-29 (75 percent active), 2,2′-Azobis (2,4 dimethylvaleronitrile) and 2,2′Azobis (isobutyronitrile) sold by E.I. DuPont de Nemours and Company under the trademarks Vazo-52 and Vazo-64, respectively. Alternatively, the free radical polymerization may be initiated by ultraviolet light using a photosensitizer such as isobutylbenzoin ether, available from Stouffer Chemical Company under the trademark Vicura-10.

For a most efficient polymerization, it is usually preferred to use at least two different initiators, which are activated at different temperatures. That is, after activating and using up a first initiator at a first temperature, the polymerization may be accelerated by raising the temperature to activate a second initiator. When the second initiator is virtually used up, the temperature is usually raised again to consume all of the initiators and complete the polymerization.

The above-described two step casting process is particularly suited to the molding of complex, flexible medical parts as well as ultraviolet cured coatings. The pre-gelation step allows good control of the rheology of coatings which is an extremely important factor in high speed coating processes. Also, as noted above, the free radical polymerization of the monomer may be completed, for example, inside a closed mold to produce rigid or flexible molded articles.

Although the above process has been described as a sequential polymerization, it will be understood that the hydrosilylation reaction and monomer polymerization could be carried out simultaneously, for example, by raising the temperature of the hydrosilylation reaction to the point where at least one of the free radical initiators is activated to effect polymerization of the monomer. However, the two-step sequential process is preferred to maintain process control and avoid undesirable cross-linking polymers.

Without cross-linking of the second polymer, the above process produces single or mono-penetrating networks (MPN) of polysiloxane. If desired, the second polymer may be cross-linked by the inclusion of a cross-linker, such as a multi-functional vinyl or vinylidene moiety, in the reaction mixture. Suitable cross-linking agents for vinyl and other polymers are well known in the art, including, for example, divinylbenzene, dimethacrylate esters, and methacrylic acid, which are particularly suitable for cross-linking methacrylates or styrenes during polymerization.

Cross-linking of the second polymer results in the production of a second polymer network which interpenetrates the polysiloxane network, thereby forming dual-penetrating networks (DPN). If a third or subsequent polymer is included in the reaction mixture and cross-linked to form separate polymer networks, the composition may be a triple penetrating network (TPN) or more. In general, the invention relates to preparing poly-penetrating networks (PPN) wherein at least one of the networks is a polyorganosiloxane network formed in a multi-component network system. The other polymers may be thermoplastic or elastomeric, although the curing will usually result in the formation of a thermosetting composition.

In addition to the above-described modified-bulk polymerization method, the present invention may be carried out with a number of different variations which are described below. One variation which is particularly suitable for the preparation of gel-coatings involves carrying out the hydrosilylation step in a

homogeneous mixture of vinyl monomer, an organo multi-functional cross-linker and an inert solvent, preferably an aromatic solvent such as toluene, hexane, heptane, cyclohexane, a paraffinic solvent such as naphtho, or any solvent which would not interfere with platinum catalyst. The cross-linking of the siloxane gel (hydrosilylation) takes place at ambient temperatures, followed by free radical polymerization of the monomer at ambient or elevated temperatures.

By adjusting the type or amount of vinyl cross-linker, a flowable coating with a controllable rheology can be produced. Further, prior to or during the free radical polymerization, an ionic and/or polar vinyl monomer may be incorporated into the reaction mixture to produce organosiloxane coatings with excellent adhesion to concrete, glass, rubber, metal and other surfaces. Film coatings from these organosiloxane interpenetrating networks show unusually high elasticity and excellent recovery, making these coatings very suitable for coating onto other elastomers and flexible tubing.

The inherent mechanical, gas permeability, optical and other properties of these films, membranes and coatings prepared by casting flowable interpenetrating polymer solutions of the present invention may be adjusted by varying the composition of the organic monomer phase. For example, by introducing hydrophilic monomers into the reaction mixture, hydrophilic organosiloxane coatings may be made which are particularly suitable for medical applications. Similarly, by adjusting the refractive index of the vinyl monomers and the polysiloxanes used, as well as by controlling the cross-link density, clear or opaque coatings may be obtained.

In another embodiment of the invention, a suspension polymerization process may be used. For example, the hydrosilylation reaction may be carried out in a primary reactor in the presence of vinyl monomer and free radical initiator. After completion of the gelation of the polysiloxane elastomer, the solution is dispersed in a second reactor in the presence of a colloid, preferably at a temperature where the half-life of the free radical initiators used is about 1-2 hours. A fine dispersion of particles is produced, and the polymerization of the monomer is carried out with one or more initiators. After polymerizing the vinyl monomer, small amounts of talc or silica or other blocking agents are added to the reaction before the slurry is allowed to cool down. This produces rubbery beads which should be air dried before being molded or extruded into a final rigid or elastomeric product.

An important advantage of the compositions of the present invention is that all of the ingredients, with the possible exception of the platinum catalyst, may be mixed together and stored or transported for considerable periods of time until ready for reaction and transformation into the interpenetrating polymer networks of the invention. For example, a premixture containing the vinylsiloxane and silicon hydride components, the organic monomer, the azo or peroxide initiators and the multi-functional vinyl cross-linkers may be prepared and stored until reaction is desired. The premix may then be treated with the platinum catalyst and heat at the desired level or levels to effectuate the hydrosilylation, polymerization and/or cross-linking, either sequentially or simultaneously, as desired.

The compositions of the present invention yield final products with improved dimensional stability and elastic behavior over the standard filled silicone rubbers. Further, since the vinyl polymerization step can be completed in a matter of a few hours instead of many hours of oven "post-curing," a significant improvement in process and handling can also be achieved. Controlling the modulus of the second penetrating network via different cross-linkers, the Shore A hardness and stiffness can be varied with a Shore A or Shore 00 from 0 to 100. The modulus and hardness may also be adjusted by selecting the proper vinyl or vinylidene monomer mixtures. Still further, the amount of the cross-linker used during the second stage can provide opaque to clear castings and moldings.

Improved biocompatibility of the compositions of the invention over conventional silicon materials can be achieved by incorporating amino acids and polar groups into the second polymer network. Also, as noted above, the present invention provides an improved route for producing silicone membrane materials with good permeability, which is extremely important in gas separation and biomedical application. Combined with the ability to produce optically clear films and coatings, the permeable membrane materials are particularly useful, for example, in the manufacture of contact lenses.

The present invention will now be illustrated in more detail with reference to the following specific, non-limiting examples. In each of the examples, the catalyst used was a toluene solution of hexachloroplatinic acid/divinyltetramethyldisiloxane complex containing 0.35 weight percent platinum (commercially available from Petrarch Systems Inc. under the designation PC072). All parts are parts by weight, but percentages in the siloxane compounds are mole percents.

Example 1

This example covers bulk polymerization of the compositions outlined in Table 1. The general polymerization procedure was carried out in three steps. After a homogeneous solution was prepared the platinum catalyst was added, allowing the hydrosilylation reaction to proceed for three hours at ambient temperatures under nitrogen until the polyorganosiloxane network was formed. The second stage was carried out at 75° C for 2-3 hours followed by two hours at 110° C. The bulk polymerizations were carried out in horizontally placed trays producing sheets for determining ASTM physical properties. The bulk polymerization experiments in Table 1 produced only solid polymer DPN systems if the platinum catalyst was added, demonstrating that the hydrosilylation reaction was critical in order to obtain a useful product. Eliminating the platinum catalyst and thus preventing the hydrosilylation reaction from taking place, we observed only oily, heterogeneous, greasy fluid products after completing the free radical reaction (Table 1 and 2, Runs 5 and 6). The semi-interpenetrating networks (MPN) had higher elongation than the full dual-penetrating network systems (DPN). The tensile strength and hardness increased by going from an MPN to a full DPN. These examples demonstrate a novel route for preparing siloxane elastomers without going through expensive compounding and crosslinking operations.

## Example 2

This example covers preparation of semi-penetrating networks according to the procedure of Example 1 where the primary network is prepared from a siloxane network (Table 3). When the second polymer was prepared from a linear styrenic polymer, the properties of these elastomers verified that a highly elastic material may be prepared. The t-butyl-styrene processed system (SPN) showed excellent optical properties. The properties in Table 4 show unexpected elongation and high resilience over standard silicone rubber material.

## Example 3

This example describes dual penetrating networks (PPN) of PDMS/PS, prepared according to Example 1 with the compositions and conditions of Table 5. Physical data tabulated in Table 6 verified that hardness and tensile strength were significantly improved by divinylbenzene. The tert-butylstyrene polymer was found to produce unexpectedly good compatibility with the polydimethylsiloxane network. The crosslinking via hydrosilylation was found to be critical for producing a useful product since the vinyl terminated siloxane and the silicone hydrides do not participate in a free radical reaction at the polymerization conditions used. Eliminating the platinum catalyst produced liquid heterogeneous viscous fluids with separate domains of some solid polystyrenic agglomerates (Run 14).

## Example 4

This example demonstrates how optically clear, semi-penetrating networks of polydimethylsiloxanes, polymethylphenylsiloxane copolymers and polymethylacrylate esters may be prepared via the present invention. Using a copolymer of dimethyldichlorosilane and diphenyldichlorosilane or copolymer prepared from octamethylcyclotetrasiloxane and octaphenylcyclotetrasiloxane or polymethylphenylsiloxane, having at least two vinyl groups per molecule, pre-dissolved in methacrylate or acrylate esters together with a multihydride siloxane, clear water-white moldable polymers were prepared after carrying out the gelation at ambient temperature for two hours, followed by three hours at 75° C and two hours at 115° C. A typical example is given in Table 7 (run 17), where a copolymer of dimethyl(75%)-diphenyl(25%)siloxane with vinyl termination having a refractive index of 1.49 was cross-linked with methylhydro(30%)-dimethylsiloxane(70%) copolymer in the presence of platinum catalyst, all pre-dissolved in isobutylmethacrylate. The optically clear products are suitable for contact lens materials, medical tubing and other optically clear products, prepared by polymerization casting or extrusion-molding technology.

## Example 5

This example demonstrates how the invention produces optically clear penetrating polymeric systems from incompatible, opaque systems such as polydimethylsiloxane/polymethacrylate esters, where the refractive indices are 1.40 and 1.48 and the cohesive energy densities are about $15(J/cm^2)^{1/2}$ and $18(J/cm^2)^{1/2}$ for the corresponding polymer systems. Using the compositions of Table 8, we discovered that completely clear material can be prepared from opaque incompatible systems as described above. The physical properties presented in Table 9 demonstrate that the crosslinking density of the second network can be adjusted to produce clear materials. Properties such as break stress, hardness, tear strength and elastic recovery are also improved over silicone elastomers using the dual network approach. This invention demonstrates how low-cost polydimethylsiloxane/polymethacrylate esters can produce clear, castable or moldable optical materials, ranging from soft to rigid materials which may be molded or shaped into any useful product.

## Example 6

This example demonstrates how the present invention can be extended to cover ionomeric interpenetrating network systems. Runs 23 and 24 shown in Table 10 cover dual penetrating networks of polydimethylsiloxane/polystyrene systems where the polystyrene network is produced by covalent (Run 23) or ionomeric, (Run 24) bonding compared to a non-cross-linked system (Run 22). The use of ionomeric bonding rather than covalent bonding allows production of more flowable, dual-network polymeric material and had a Shore A hardness of 64 (Run 24). The fact that platinum catalysts allow the hydrosilylation reaction to proceed even in the presence of ionic vinyl monomers was also quite unexpected, especially since platinum catalysts for the hydrosilylation reactions are known to be deactivated by strong acids. The internal hydrogen bonding between two acrylic acid monomers may have overcome this problem, thus allowing extension of the invention to dual ionomeric interpenetrating networks as demonstrated in this example.

## Example 7

This example illustrates the preparation of dual interpenetrating networks of polydimethylsiloxane and polyvinylisobutyl ethers, where the second network poly(vinylisobutyl) ether consists of a semi-crystalline thermoplastic network, while the primary network (the PDMS network) is a permanent network. The following polymerization was carried out in bulk under nitrogen on a 6 x 6 $in^2$ Teflon coated tray. Twenty grams of a vinyl-terminated polydimethylsiloxane, having a kinematic viscosity of 165,000 ctsk. were dissolved in twenty grams of vinylisobutyl ether, producing a homogeneous solution. To this solution was added 2.5 grams of a methylhydro(30%)-dimethylsiloxane(70%) copolymer having a kinematic viscosity of 1000 ctsk. After cooling this solution down to 0° C under nitrogen, 0.090 grams of the platinum catalyst (0.35 wt.%) and 0.040 grams of borontrifluoroethyl ether complex were quickly mixed, and the mixture was allowed to polymerize under nitrogen inside a Teflon coated tray, stored on ice. After four hours we observed that a tough, rubbery, optically clear 72 mils thick sheet with a Shore A of 43 had been produced. This improved toughness resulted from the polydimethylsiloxane network produced via the hydrosilylation reaction and the semi-crystalline network structure present in isotactic poly(isobutyl)vinyl ether having a crystalline melting point of about 150° C. The dual network produced above can be molded or extruded above the melting point mentioned, having improved hydrophilic, permeability, adhesion and mechanical properties compared to polydimethylsiloxane elastomers.

## Example 8

This example describes the preparation of interpenetrating networks in the form of flowable "gel coatings" by controlling parameters such as molecular weight and cross-link density in each of the separate networks.

To a stirred reactor was charged fifty parts of a vinyl-terminated siloxane having a kinematic viscosity of 65,000 ctsk, three parts of a (30%)methylhydro-(70%)dimethylsiloxane copolymer with a viscosity of 25-30 cps., forty-five parts of 2-ethylhexylmethacrylate and fifteen parts of isobutylmethacrylate added under dry nitrogen. The hydrosilylation reaction or the "polysiloxane gelation" reaction was allowed to proceed for two hours at ambient temperature before 0.050 parts of Vazo-52 and Vazo-64 were added. The reactor temperature was increased to 65° C, 80° C and 95° C in steps of two and one-half hours at each temperature, with one-half hour heat-up time between each step. A free flowing liquid with kinematic viscosity of 67 centistokes at a shear rate of 16.8 reciprocal seconds at 23° C was produced. The physical properties of the coating were tested after casting a 10 mil film from the "gel coating" onto a Teflon surface. The physical properties in Table 11 clearly show the highly resilient nature of this hydrophilic "gel coating" based on dual-interpenetrating networks. This gel coating is a stable, homogeneous, flowable gel. Addition of toluene as a diluent results in dual phases, one phase containing the interpenetrating network phase with a clear toluene phase above.

## Example 9

This example demonstrates the preparation of hydrophilic coatings by incorporating water soluble or ionic monomers during the polymerization step. To a reactor was added twenty-five parts of vinyl terminated polydimethylsiloxane having a viscosity of 16,500 centistokes, three parts of a 25 centistoke (30%)methylhydro-(70%)dimethylsiloxane copolymer, twenty-five parts.. of 2-ethylhexyl-methacrylate, two parts of N-vinyl pyrrolidone, 0.32 parts of diethylene glycolmethacrylate and one hundred parts of toluene. Furthermore, 0.1 parts of a 0.35 weight % platinum catalyst together with 0.050 parts of Vazo-52 and Vazo-64 were added. After completing the silicone crosslinking reaction (i.e. the hydrosilylation reaction) the free radical reaction was carried out at 65C, 80° C and 95° C over a time period of two and one-half hours at each temperature, with a heat-up time of one-half hour. The final product was a white stable fluid with a solids content of 34% having an apparent viscosity of 281 centipoise at 23° C measured on a Brookfield Viscometer at a shear rate of $168 sec^{-1}$. Physical properties were measured on a 10 mils thick film cast from the reactor product. The completely elastic film had a break stress of 162 psi, elongation at break of 617%, set at break of 0%, Shore A Hardness of 26. The casting showed excellent adhesion to glass, metal and flexible plastics as well as human skin. Immersing 10 mil tensile bars of pure silicone gel coating (control) and our hydrophilic network coating in distilled water for thirty minutes followed by thirty minutes air drying verified a water uptake of 4.69 weight % for our hydrophilic coatings vs. 0.07 weight percent for the control, thus confirming the improved hydrophilic nature of the dual interpenetrating network coatings according to the present invention.

## Example 10

This example describes the preparation of release coatings based on dual penetrating networks of polyorganosiloxane and polymethylmethacrylate esters for high speed coating applications. The following solution polymerization was carried out. Vinyl terminated polydimethylsiloxane, fifty parts, having a bulk viscosity of 165,000 centistokes at 23° C together with three parts (30%)methylhydro-(70%)dimethylsiloxane copolymer having a solution viscosity of 25-30 centistokes, were dissolved in 250 parts toluene, followed by the addition of 37.5 parts of 2-ethylhexylmethacrylate, 0.325 parts of divinylbenzene and 12.5 parts of isobutylmethacrylate. To this solution were added 0.150 parts of a 0.35 weight % platinum catalyst and 0.050 parts of 2,2′-Azobis(2,4-dimethylvaleronitrile) and 0.050 parts of 2,2′-Azobis(isobutyronitrile). Following three hours of hydrosilylation at 25° C, the free radical polymerization was carried out at 60° C, 80° C and 90° C for two hours at each step under nitrogen. Final product had a solids content of 29 weight percent with a kinematic viscosity of 280 centistokes. A 0.5 mil coating on aluminum substrate produced a release value of 62 grams/in. for a styrene-butadiene rubber adhesive-coated label tested with a twelve inch per minute strain rate with a 180° peel angle, using a one-inch wide coated label. Adjusting the acrylic monomer ratio (tacky acrylics below glass transition temperature($T_G$) versus hard acrylics above $T_G$) in this example, coatings were prepared ranging from low release to adhesive properties.

## Example 11

This example illustrates the preparation of a concrete sealing coating based on our invention. To a reactor was charged fifty parts of a vinyl terminated siloxane having a viscosity of about 65,000 centistokes, six parts of a (30%)methylhydro-(70%)dimethylpolysiloxane with a viscosity of 25-30 centistokes, twenty-five parts of 2-ethylhexylmethacrylate, twenty-five parts of isobutylmethacrylate, toluene 250 parts. After 0.180 parts of the platinum catalyst (0.35 weight %) was added the gelation reaction was allowed to proceed for two hours at 23° C under nitrogen, before 0.325 parts of divinylbenzene and 0.50 parts of Vazo-52 and Vazo-64 were added and the polymerization completed as in the Example 9. The final solution had a solids content of 27.3 weight % and a solution viscosity of 48 centistokes. These semi-translucent coatings were applied to dried 4" x 4" x 4" concrete blocks and immersed in deionized water with a control block in a separate bath. After twenty-four hours of immersion the control picked up 3.8 weight % water vs. 0.6 weight percent for the coated material. After thirty days immersed in water the uncoated concrete block showed significant signs of erosion, while the coated block remained unchanged. The excellent performance of the concrete coating was also verified by no changes in the pH of 7, while the immersion bath for the control had changed to a pH of 8.2 and to a yellow color with concrete debris present on the bottom. The sealant showed one-hundred percent performance after sixty days while the control block was now developing severe pitting.

## Example 12

This example demonstrates the preparation of dip-coating, semi-permeable and other highly elastic membranes utilizing the present invention with dual interpenetrating polydimethylsiloxane and addition polymers. To a reactor was charged fifty parts of dimethylsiloxane vinyl terminated, four parts of (30%)-methylhydro-(70%)dimethyl, twenty parts of 2-ethylhexylmethacrylate, thirty parts of isobutylmethacrylate and two-hundred parts of toluene. The hydrosilylation reaction was activated by 0.150 parts of a 0.3 weight percent platinum catalyst and completed over the next two hours at 23° C. Thereafter, 0.65 parts of divinylbenzene together with 0.5 parts of Vazo-52 and Vazo-64 were added, before the polymerization was completed at 65° C, 80° C and 95° C for two and one-half hours at each step. The final product had a viscosity of 850 centipoise. Coatings applied horizontally or vertically to Teflon surfaces produced highly homogeneous, highly elastic membranes, with excellent elastic recovery. Coatings were compared to pure silicone coatings prepared via identical hydrosilylation reactions. However, these silicone coatings were found to be inferior in mechanical and rheological properties compared to the interpenetrating network coatings of the present invention.

## Example 13

This example illustrates the preparation of pressure sensitive adhesives based on dual penetrating networks of the present invention. To a stirred reactor was charged twenty-five parts vinyl terminated polydimethylsiloxane with a kinematic viscosity of 65,000 centistokes, three parts of (30%)methylhydro-(70%)dimethylsiloxane copolymer of 25-30 centistokes, twenty-five parts of 2-ethylhexylmethacrylate and two-hundred parts of toluene. After adding 0.09 parts of 0.35 weight % platinum catalyst, the gelation step was extended over two hours at ambient temperature. Next, 0.50 parts of Vazo-52 and Vazo-64 together with 0.65 parts of divinylbenzene were added before the polymerization was carried out at 55-60° C, 75-80° C and 95° C for two and one-half hours at each step producing a semi-translucent fluid with a viscosity of seventy-eight centistokes. Aluminum foil, 6 mils thick, was coated with a one mil thick film of final product before being rolled together with a 5 pound weight face to face. A lap peel test was run according to ASTM-D-1000 showing a peel adhesion of 612 g/cm, which remained constant with time. This demonstrates that a pressure sensitive adhesive can be prepared directly from coatings of the invention, without requiring the time sensitive curing process normally required for pure silicone-based pressure sensitive adhesives.

Example 14

This example illustrates the preparation of coatings or membranes by a continuous process using ultra violet radiation polymerization on a continuous belt or in a continuous coating, casting or calendering operation. To demonstrate this process, we used a Fusion System's, Model F450, equipped with a continuous belt moving at a constant rate, having a U.V. lamp (D bulb) mounted above. A homogeneous polydimethylsiloxane gel was prepared in a methacrylate ester by carrying out the pre-gelation step in a batch through the following procedure: fifty parts of vinyl terminated polydimethylsiloxane having a kinematic viscosity of 65,000 centistokes, four parts of (30%)methylhydro-(70%)dimethylsiloxane copolymer, fifty parts of isobutylmethoxide, 0.65 parts of diethyleneglycolmethacrylate and two parts Vicure-10 were mixed until a clear homogeneous solution was prepared. Next, 0.180 parts of a 0.35 weight percent platinum catalyst were quickly mixed in, and the solution cast onto a flat surface, allowing the hydrosilylation reaction to proceed until a non-flowable gel was produced. The gel was passed under the U.V. lamp at a rate of 11 ft/min allowing a flexible membrane of 5 mil. thickness to be produced. This highly elastic membrane of dual interpenetrating network polymer had significantly improved mechanical properties compared to bulk hydrosilylation which resulted in an extremely soft and fluid polysiloxane compound.

It will be recognized by those skilled in the art that changes may be made to the above-described embodiment of the invention without departing from the broad inventive concepts thereof. It is understood, therefore, that this invention is not limited to the particular embodiment disclosed, but it is intended to cover all modifications which are within the scope and spirit of the invention as defined by the appended claims.

Table 1

Preparation of Monopenetrating (MPN) and Dual Penetrating (DPN) Networks of Polysiloxane and Polystyrenic Materials

| Chemicals | Run-1 | Run-2 | Run-3 | Run-4 | Run-5 | Run-6 |
|---|---|---|---|---|---|---|
| Type of IPN - | MPN | DPN | MPN | DPN | Control | Control |
| Methylhydro(30%)-dimethyl siloxane(70%)-copolymer, visc. 25 ctsk., parts | 5 | 5 | 5 | 5 | 5 | 5 |
| Polydimethylsiloxane, vinyl terminated, visc., 1000 ctsk., parts | 40 | 40 | 40 | 40 | 40 | 40 |
| tert-butylstyrene, parts | 40 | 40 | - | - | - | - |
| styrene, parts | - | - | 40 | 40 | 40 | 40 |
| divinylbenzene, parts | - | 1 | - | 1 | - | 1 |
| Lupersol-11, parts | 0.075 | 0.075 | 0.075 | 0.075 | 0.075 | 0.075 |
| Trigonox-29, parts | 0.015 | 0.015 | 0.015 | 0.015 | 0.015 | 0.015 |
| Pt-catalyst (0.35 wt.%), parts | 0.060 | 0.060 | 0.060 | 0.060 | - | - |
| Product Description | elastomeric | elastomeric | elastomeric | elastomeric | oily fluid | oily fluid |

Table 2

Physical Properties of Monopenetrating (MPN) and Dual Penetrating Network (DPN) Systems of Polysiloxane-Polystyrene Materials

| Run No. / Properties | Break* strength psi | Elongation at break % | Resilience ASTM-D-2632 | Hardness Shore A | Hardness Shore OO | Type of (IPN) Inter-penetrating Network Systems |
|---|---|---|---|---|---|---|
| Run-1 | 82 | 692 | 48 | 9 | 54 | MPN |
| Run-2 | 312 | 220 | 35 | 60 | 89 | DPN |
| Run-3 | 137 | 738 | 56 | 7 | 39 | MPN |
| Run-4 | 255 | 539 | 43 | 17 | 68 | DPN |
| Run-5 | fluids | - | - | - | - | - |
| Run-6 | fluids | - | - | - | - | - |

* ASTM-D-638 Crosshead speed 2"/min.

Table 3

Preparation of Monopenetrating Network Materials (MPN) of Polydimethylsiloxane and Organo-vinylpolymers

| Run No. / Chemicals | Run-7 | Run-8 | Run-9 |
|---|---|---|---|
| Methylhydro(30%)-dimethyl siloxane(70%)copolymer, 25 ctsk., parts | 5 | 5 | 5 |
| Polydimethylsiloxane, vinyl terminated, 1000 ctsk., parts | 40 | 40 | 40 |
| tert-butylstyrene, parts | 40 | - | - |
| Styrene, parts | - | 40 | - |
| iso-butylmethacrylate, parts | - | - | 40 |
| Lupersol-11, parts | 0.075 | 0.075 | 0.075 |
| Trigonox-29, parts | 0.045 | 0.045 | 0.045 |
| Pt-catalyst (0.35 wt. %), parts | 0.060 | 0.060 | 0.060 |

Polymerization conditions similar to those described for Table 1.

Table 4

Physical Properties of Monopenetrating Network Materials (MPN) of Polydimethylsiloxane and Organo-vinyl Polymers

| Properties / Run No. | Break* Stress psi | Elong.* at break % | Hardness Shore A | Hardness Shore 00 | Tear** Die B lb/in | Resilience ASTM D2632 | Melt*** Flow G g/10 min. |
|---|---|---|---|---|---|---|---|
| Run-7 | 305 | 972 | 34 | 78 | 159 | 36 | 1.74 |
| Run-8 | 392 | 977 | 6 | 50 | 225 | 28 | 1.12 |
| Run-9 | 513 | 763 | 16 | 50 | 302 | - | - |

*ASTM-D-638 at 2 in/min.

**ASTM-D-624 at 20in/min.

***ASTM-D-1238 G conditions

Table 5

Preparation of Dual Penetrating Networks of Polydimethylsiloxane and Polystyrenics via Sequential Polymerization

| Chemicals / Run No. - | Run-10 | Run-11 | Run-12 | Run-13 | Run-14 |
|---|---|---|---|---|---|
| Methylhydro(30%)dimethylsiloxane(70%)copolymer, 25 ctsk., parts | 5 | 5 | 5 | 5 | 5 |
| Polydimethylsiloxane, vinyl terminated, 1000 ctsk., parts | 40 | 40 | 40 | 40 | 40 |
| Styrene, parts | 40 | 60 | - | 40 | 40 |
| tert-butylstyrene, parts | - | - | 40 | - | - |
| Divinylbenzene, parts | 4 | 6 | 4 | - | 4 |
| Lupersol-11, parts | 0.045 | 0.060 | 0.045 | 0.045 | 0.045 |
| Trigonox-29, parts | 0.045 | 0.045 | 0.045 | 0.045 | 0.045 |
| Pt catalyst(0.35 wt.%), parts | 0.060 | 0.060 | 0.060 | - | - |

Polymerization conditions: (similar to description in Example 1)
2 hrs. at 25°C
3 hrs. at 75°C
2 hrs. at 110°C

Table 6

Physical Properties of Dual Penetrating Network Materials (DPN) of Polydimethylsytrene and Polystyrenics with High Degree of Crosslinking

| Run No. / Properties | Tensile* Break strength psi | Elongation at Break % | Tear** Die B ft lbs./in. | Shore A*** Hardness | Set* at Break % |
|---|---|---|---|---|---|
| Run-10 | 588 | 42 | 37 | 79 | - |
| Run-11 | 694 | 40 | 39.2 | 83 | - |
| Run-12 | 325 | 848 | 70 | 63 | 1.7 |
| Run-13 | Too fluid and hetergeneous to test. | | | | |
| Run-14 | Too fluid and hetergeneous to test. | | | | |

*ASTM-D-638 at 2 in/min
**ASTM-D-624 at 20 in/min
***ASTM-D-2240 - Durometer Hardness at 23$^{\circ}$C

Table 7

Preparation and Properties of Monopenetrating Networks of Polysiloxanes and Polymethacrylate Esters (MPN Materials)

| Run No. | Run-16 | Run-17 |
|---|---|---|
| **Formulation** | | |
| Methylhydro(30%)-dimethylsiloxane (70%)coplymer, 25 ctsk., parts | 2.5 | 2.5 |
| Polydimethylsiloxane, vinyl terminated, 1000 ctsk., parts | 20 | - |
| Dimethyl(75%)-diphenyl(25%) siloxane copolymer, vinyl terminated, 1500 ctsk., parts | - | 20 |
| Isobutylmethacrylate, parts | 20 | 20 |
| Lupersol-11, parts | 0.060 | 0.060 |
| Lupersol-256, parts | 0.045 | 0.045 |
| Pt-catalyst (0.35 wt.%)parts | 0.030 | 0.030 |
| **Properties** | | |
| Hardness Shore A | 67 | 82 |
| Resilience ASTM-D-2632 | 55 | 43 |
| Optical Clarity | turbid | clear |

Table 8

Preparation of Clear Dual Network Systems of Polydimethylsiloxane/polymethacrylate Materials

| Chemicals | Run No. - Run-18 | Run-19 | Run-20 | Run-21 |
|---|---|---|---|---|
| Polydimethylsiloxane vinyl terminated, 1000 ctsk., parts | 50 | 50 | 50 | 50 |
| Methylhydro(30%)-dimethylsiloxane(70%)-copolymer, 25 ctsk., parts | 6 | 6 | 6 | 6 |
| 2-ethylhexylmethacrylate, parts | 50 | 50 | 50 | 50 |
| Divinylbenzene, parts | - | 1 | 2 | 3.5 |
| Lupersol-11, parts | 0.120 | 0.120 | 0.120 | 0.120 |
| Trigonox-29, parts | 0.060 | 0.060 | 0.060 | 0.060 |
| Pt-catalyst(0.35 wt.%), parts | 0.180 | 0.180 | 0.180 | 0.180 |

Polymerization Conditions:

(similar to description for Table 1)

2 hours at 25°C
3 hours at 75°C
2 hours at 115°C
All under $N_2$.

Table 9

Physical Properties of Clear, Dual Penetrating Network of Polydimethylsiloxane/Polymethacrylate Materials

| Properties | Break Stress (1) psi | Elongation (1) at Break % | Set (4) at Break % | Tear (2) Die B lb/in | Shore A (3) Hardness A | Shore A (3) Hardness 00 | Refractive Index $n_D$ (23°C) | Optical Clarity |
|---|---|---|---|---|---|---|---|---|
| Run No. | | | | | | | | |
| Run-18 | 10 | 1700 | - | 17 | 0 | - | white | opaque |
| Run-19 | 146 | 577 | 1.4 | 69 | 28 | 60 | 1.4290 | clear |
| Run-20 | 241 | 420 | 1.6 | 97 | 36 | 80 | 1.4356 | clear |
| Run-21 | 473 | 293 | - | 201 | 42 | 85 | 1.4469 | clear |

(1) ASTM-D-638, Crosshead speed 2"/min.

(2) ASTM-D-624, Crosshead speed 20"/min.

(3) ASTM-D-2240, Durometer hardness at 23°C

(4) ASTM D-638 at 2"/min.

Table 10

Penetration of PDMS/polystyrene Dual Penetrating Networks based on Ionomeric and Covalent Crosslinks

| Chemicals | Run 22 | Run 23 | Run 24 |
|---|---|---|---|
| Polydimethylsiloxane vinyl terminated, 1000 ctsk., parts | 20 | 20 | 20 |
| Methylhydro(30%)-dimethylsiloxane(70%)-copolymer, 25 ctsk., parts | 5 | 5 | 5 |
| Styrene, parts | 20 | 20 | 20 |
| Divinylbenzene, parts | - | 1.5 | - |
| Methacrylic acid, parts | - | - | 1 |
| Lupersol-11, parts | 0.045 | 0.045 | 0.045 |
| Trigonox-29, parts | 0.015 | 0.015 | 0.015 |
| Platinum catalyst (0.35wt.%), parts | 0.045 | 0.045 | 0.045 |

Polymerization conditions under nitrogen:
(similar to those described in Example 1)

2 hours at 25°C
3 hours at 75°C
2 hours at 105°C

Table 11

| Physical Properties of Dual Network Coatings of Polyorganosiloxane and Addition Polymer Networks | |
|---|---|
| Tensile Properties * | |
| Break stress, psi | 125 |
| Elongation at break % | 700 |
| Set at break % | 0 |
| Shore Hardness A** | 28 |
| Rheological Properties *** (27 wt% in toluene) | |
| Shear rate, $sec^{-1}$ | 168 |
| Apparent viscosity, cps. | 663 |

* ASTM-D-638 Crosshead 2"/min.
** ASTM-D-2240, Durometer hardness at 23°
*** Brookfield Digital Viscometer at 23.

## Claims

1. A composition comprising a relaxed, perturbed, cross-linked polyorganosiloxane network dispersed in a second organic polymer.

2. A composition according to Claim 1 wherein said second polymer is not significantly cross-linked, whereby said polyorganosiloxane forms a mono-penetrating network.

3. A composition according to Claim 1 wherein said second polymer is substantially cross-linked to itself but not significantly cross-linked to said polyorganosiloxane, whereby said polyorganosiloxane and said second polymer form a dual-penetrating polymer network.

4. A composition according to Claim 3 comprising at least a third polymer which is substantially cross-linked to itself but not significantly cross-linked to said other polymers, whereby said polymers form a poly-penetrating polymer network.

5. A composition according to Claim 1 wherein said second polymer is an addition polymer.

6. A composition according to Claim 5 wherein said addition polymer is selected from the group consisting of vinyl and vinylidene polymers.

7. A composition according to Claim 5 wherein said addition polymer is a glassy polymer having a glass transition temperature of about -120° C to 280° C.

8. A composition according to Claim 5 wherein said addition polymer is a homo- or copolymer having a melting point above 23° C.

9. A composition according to Claim 5 wherein said addition polymer is a thermoplastic ionomeric polymer.

10. A composition according to Claim 1 wherein said polyorganosiloxane is cross-linked by a hydrosilylation reaction.

11. A composition according to Claim 1 wherein said polyorganosiloxane is present in an amount of about 0.01 to 99.99 weight percent.

12. A composition according to Claim 1 which is optically clear.

13. A composition according to Claim 1 which is homogeneous.

14. A composition according to Claim 1 in the form of a gel coating.

15. A composition according to Claim 1 in the form of a hydrophilic coating.

16. A composition according to Claim 1 wherein said polyorganosiloxane is selected from the groups consisting of polydimethylsiloxanes, polydiphenylsiloxanes, polytrimethylsiloxanes, and copolymers thereof.

17. A composition according to Claim 1 wherein said second polymer is selected from the group consisting of polyacrylates, polymethacrylates, styrenes, vinylpyrrolidones and vinylpyridines.

18. A method of making a cross-linked polyorganosiloxane network dispersed in a second organic polymer comprising dispersing a component having SiH groups and an organosiloxane having vinyl groups in a reactive liquid monomer of said second polymer, cross-linking said component and said organosiloxane by hydrosilylation to form said network in said monomer, and simultaneously or subsequently polymerizing said monomer.

19. A method according to Claim 18 wherein said SiH groups and vinyl groups are on the same organosiloxane.

20. A method according to Claim 18 wherein said SiH groups are on a low molecular weight to polymeric component and said vinyl groups are on a separate organosiloxane.

21. A method according to Claim 18 wherein said component, organosiloxane and monomer are dispersed in a non-reactive organic medium.

22. A method according to Claim 18 wherein said hydrosilylation is catalyzed by a platinum catalyst.

23. A method according to Claim 18 wherein the polymerization of said monomer is selected from the group consisting of free radical, anionic, cationic and organometallic polymerization.

24. A method according to Claim 18 wherein said dispersion is substantially homogeneous.

25. A method according to Claim 18 wherein said polymerized monomer is cross-linked to form a dual-penetrating network with said cross-linked polyorganosiloxane.

26. A method according to Claim 25 wherein at least a second monomer is polymerized and cross-linked subsequent to said hydrosilylation to form a poly-penetrating network.

27. A method according to Claim 25 wherein the cross-linking is carried out in a non-reactive solvent and the cross-linking density of each network is controlled to produce a smooth, flowing gel having a viscosity below about 10,000 centistokes at the boiling point of the solvent.

28. A method according to Claim 18 wherein at least said polymerization is carried out in small dispersion droplets in non-reactive organic medium to form interpenetrating network beads, and recovering the network beads after addition of talc or silica to the medium.

29. A method according to Claim 18 wherein said polyorganosiloxane network and said liquid monomer form a gel which is then emulsified in water with organosilicon block polymers, followed by emulsion polymerization of said monomer to produce a free-flowing aqueous coating of said network and said polymer.

30. A method according to Claim 18 wherein said network in said monomer is cast into a mold, and said polymerization is carried out after casting.

31. A method according to Claim 18 wherein the monopenetrating network produced thereby is cast into a mold, and said polymerized monomer is cross-linked after casting.

32. A casting composition for coating and molding comprising a dispersion of a cross-linked polyorganosiloxane in a non-silicone organic monomer, and an initiator dispersed in said monomer which will polymerize said monomer when activated.

33. A casting composition according to Claim 32 wherein said initiator is activatable by heat.

34. A casting composition according to Claim 33 comprising at least two initiators activatable at different temperatures.

35. A casting composition according to Claim 32 wherein said initiator is selected from the group consisting of azo and peroxide compounds.

36. A casting composition according to Claim 32 which also includes a non-reactive solvent for the components whereby the composition is in the form of a pourable gel for preparing films and coatings.

37. A casting composition according to Claim 32 which also includes a cross-linking agent for said polymerizable monomer.

38. A molding composition comprising dried beads for molding and extrusion, said beads comprising a dispersion of a relaxed, perturbed, and cross-linked polyorganosiloxane in a homogeneous, non-silicone organic polymer.